# EUROPÄISCHE PATENTSCHRIFT

(11) **EP 1 448 956 B1**
(45) Veröffentlichungstag und Bekanntmachung des Hinweises auf die Patenterteilung: **14.10.2015**
(21) Anmeldenummer: 02797587.9
(22) Anmeldetag: 17.08.2002
(51) Int. Cl.: G01F 1/84

(54) **MESSAUFNEHMER VOM VIBRATIONSTYP**
VIBRATIONAL-TYPE MEASURING SENSOR
CAPTEUR DE MESURE DE TYPE VIBRATOIRE

(30) Priorität: 29.08.2001 EP 01120561
(43) Veröffentlichungstag der Anmeldung: 25.08.2004
(73) Patentinhaber: Endress + Hauser Flowtec AG, 4153 Reinach (CH)
(72) Erfinder: BITTO, Ennio, CH-4147 Aesch (CH); SCHÜTZE, Christian, CH-4055 Basel (CH)
(74) Vertreter: Andres, Angelika Maria
(86) Internationale Anmeldenummer: PCT/EP2002/009211
(87) Internationale Veröffentlichungsnummer: WO 2003/021202

(56) Entgegenhaltungen:
- WO-A-01/33174
- US-A- 4 876 898
- US-A- 5 301 557

## Beschreibung

Die Erfindung betrifft Messaufnehmer vom Vibrationstyp für ein zu messendes Fluid, der in eine vom Fluid mindestens temporär durchströmte Rohrleitung einzusetzen ist.

Derartige Messaufnehmer umfassen überlicherweise mindestens ein gebogenes, im Betrieb vibrierendes Messrohr zum Führen des Fluids und ein das mindestens eine Messrohr umhüllendes Gehäuse.

Hauptvertreter derartiger Messaufnehmer sind nach dem Coriolisprinzip arbeitende Massedurchfluss/Dichte/Viskositäts-Aufnehmer. Mit einem solchen Aufnehmer kann nicht nur der momentane Massedurchfluss des gerade in der Rohrleitung strömenden Fluids, gemessen werden, sondern es können immer auch die Dichte des Fluids aufgrund der momentanen Schwingfrequenz der Messrohre und die Viskosität des Fluids aufgrund der zur Aufrechterhaltung von deren Schwingungen erforderlichen Leistung sowie die Temperatur des Fluids gemessen werden. Der Massedurchfluss ist per definitionem die pro Zeiteinheit durch jeden Messrohr-Rohrquerschnitt fließende Masse des Fluids.

In der US-A 48 76 898 ist ein Coriolis-Massedurchflussaufnehmer für den Einsatz bei Temperaturen bis zu 220 °C beschrieben, der in eine von einem Fluid mindestens temporär durchströmte Rohrleitung einzusetzen ist und der umfasst:
- zwei parallele gebogene, im Betrieb vibrierende Messrohre zum Führen des Fluids,
- ein die Messrohre abdeckendes Metall-Gehäuse und
- eine Trägeranordnung aus Metall,
   -- in der die Messrohre einlass- und auslass-seitig schwingfähig gehaltert sind und
   -- aus der die Messrohre seitwärts herausragen,
   -- welches Metall-Gehäuse zum Einhüllen der Messrohre aus einer ersten Kappenhälfte und einer zweiten Kappenhälfte besteht,
      --- von welcher ersten Kappenhälfte ein Rand aus einem in einer ersten Ebene liegenden, kreisbogen-förmigen ersten Randteil mit einem ersten Krümmungsradius und aus einem in einer zur ersten Ebene senkrechten zweiten Ebene liegenden, kreisbogen-förmigen zweiten Randteil mit einem zweiten, wesentlich kleineren Krümmungsradius besteht und
      --- von welcher zweiten Kappenhälfte ein Rand aus einem in einer dritten Ebene liegenden, kreisbogen-förmigen dritten Randteil mit dem ersten Krümmungsradius und aus einem in einer zur dritten Ebene senkrechten vierten Ebene liegenden, kreisbogen-förmigen vierten Randteil mit dem zweiten Krümmungsradius besteht,
      --- wobei der erste und der zweite Randteil miteinander durchgehend verschweißt sind und
      --- wobei der zweite und der vierte Randteil mit der Trägeranordnung durchgehend verschweißt sind.

Ferner ist in der US-A 53 01 557 ein Coriolis-Massedurchflussaufnehmer beschrieben, der in eine von einem Fluid mindestens temporär durchströmte Rohrleitung einzusetzen ist und der umfasst:
- zwei parallele gebogene, im Betrieb vibrierende Messrohre zum Führen des Fluids,
- eine Trägeranordnung aus Metall,
   -- in der die Messrohre einlass- und auslass-seitig schwingfähig gehaltert sind und
   -- aus der die Messrohre seitwärts herausragen, und
- ein die Messrohre vollständig umhüllendes gebogenes Metallrohr,
   -- das dem Verlauf der Messrohre, davon gleichmäßigen Abstand haltend, folgt und
   -- das, nachdem es entsprechend dem Verlauf der Messrohre gebogen worden und durch einen Längsschnitt in zwei gleiche Rohrhälften temporär geteilt worden ist, nach dem Umlegen um die Messrohre durch Verschweißen der Rohrhälften wieder hergestellt ist und
   -- von dem die Enden mit der Trägeranordnung durchgehend verschweißt sind.

In der genannten US-A 53 01 557 ist auch ein Coriolis-Massedurchflussaufnehmer beschrieben, der in eine von einem Fluid mindestens temporär durchströmte Rohrleitung einzusetzen ist und der umfasst:
- zwei parallele gebogene, im Betrieb vibrierende Messrohre zum Führen des Fluids,
- eine Trägeranordnung aus Metall,
   -- in der die Messrohre einlass- und auslass-seitig schwingfähig gehaltert sind und
   -- aus der die Messrohre seitwärts herausragen, und
- ein die Messrohre vollständig umhüllendes, aus abschnittsweise geraden, miteinander endseits verschweißten Teilrohren zusammengesetztes Metallrohr,
   -- die aus tiefgezogenen, nach dem Umlegen um die Messrohre miteinander durchgehend verschweißten Halbschalen bestehen.

Schließlich wird von der Endress+Hauser-Firmengruppe ein Coriolis-Massedurchfluss/Dichte-Aufnehmer unter der Bezeichnung Promass F vertrieben, der in eine von einem Fluid mindestens temporär durchströmte Rohrleitung einzusetzen ist und der umfasst:
- zwei parallele gebogene, im Betrieb vibrierende Messrohre zum Führen des Fluids,
- ein die Messrohre umhüllendes Metall-Gehäuse
   -- mit einem Trägerrohr aus Metall,
      --- in dem die Messrohre einlass- und auslass-seitig schwingfähig gehaltert sind und
      --- aus dem Messrohr-Segmente seitwärts durch zwei Ausnehmungen hindurch herausragen, und
   -- mit einer tiefgezogenen Metallkappe zum Abdecken der Messrohr-Segmente,
      --- von der ein Rand mit dem Trägerrohr durchgehend verschweißt ist.

Das Tiefziehen von Formkörpern aus Metall, also auch der eben erwähnten Metallkappen, erfolgt in einer entsprechenden Metall-Tiefziehform, deren Herstellkosten sehr hoch sind. Das Tiefziehen lohnt sich daher nur bei ausreichend hohen Stückzahlen der damit herzustellenden Formkörper. Da die erwähnten Coriolis-Massedurchfluss/ Dichte-Aufnehmer Promass F für verschiedene Standard-Nennweiten bis zu 100 mm jeweils in großen Stückzahlen hergestellt werden, ist das Tiefziehen der Metallkappen wirtschaftlich, obwohl für jede Nennweite eine eigene Tiefziehform erforderlich ist.

Werden jedoch für bestimmte Nennweiten, insb. für Nennweiten größer als 100 mm, aber auch für Nicht-Standard-Nennweiten kleiner als 100 mm, nur geringe Stückzahlen erwartet, ist das Herstellen der Metallkappen mittels solcher an die einzelnen Nennweiten speziell angepasster Tiefziehformen aufgrund von deren hohen Kosten praktisch nicht realisierbar.

Eine Aufgabe der Erfindung besteht daher darin, einen Messaufnehmer vom Vibrationstyp mit einer, insb. durch Kaltverformen, kostengünstiger als bisher herstellbaren Metalikappe anzugeben. Eine weitere Aufgabe der Erfindung besteht darin, ein Verfahren zum Verbinden der Metallkappe mit einer Trägeranordnung eines Messaufnehmers vom Vibrationstyp anzugeben, das es ermöglicht, den Messaufnehmer insgesamt billiger herzustellen.

Zur Lösung dieser Aufgaben besteht die Erfindung in einem Messaufnehmer vom Vibrationstyp für ein Fluid, der in eine vom Fluid mindestens temporär durchströmte Rohrleitung einzusetzen ist und der umfasst:
- mindestens ein gebogenes, im Betrieb vibrierendes Messrohr zum Führen des Fluids und
- ein das mindestens eine Messrohr umhüllendes Gehäuse
   -- mit einer Trägeranordnung aus Metall,
      --- in der das mindestens eine Messrohr einlass-und auslass-seitig schwingfähig gehaltert ist und
      --- aus der ein Messrohr-Segment seitwärts herausragt, und
   -- mit einer aus einer eine, beispielsweise viertel-torus-förmige, Randwulst aufweisenden ersten Kappenhälfte und einer, beispielsweise viertel-torus-förmige, zweiten Kappenhälfte bestehenden Metallkappe zum Abdecken des Messrohr-Segments bzw. der Messrohr-Segmente,
- von welcher ersten Kappenhälfte ein Rand aus einem ersten Randteil, einem zweiten Randteil, einem dritten Randteil und einem kreissbogen-förmigen vierten Randteil besteht und
- von welcher zweiten Kappenhälfte ein Rand aus einem geraden fünften Randteil, einem sechsten Randteil, einem siebten Randteil und einem kreissbogen-förmigen achten Randteil besteht,
   --- wobei der zweite, dritte sowie vierte Randteil an der Randwulst der ersten Kappenhälfte gebildet sind,
   --- wobei der sechste, siebte und achte Randteil an der Randwulst der zweiten Kappenhälfte gebildet sind,
   --- wobei der erste, zweite und dritte bzw. der fünfte, sechste und siebte Randteil mit der Trägeranordnung durchgehend verbunden sind und
   --- wobei der vierte sowie der achte Randteil miteinander durchgehend verbunden sind.

Zur Lösung der genannten Aufgaben besteht die Erfindung ferner in einem Verfahren zum Herstellen einer Verbindung einer Metalikappe mit einer Trägeranordnung eines Messaufnehmers vom Vibrationstyp für ein Fluid, der in eine vom Fluid mindestens temporär durchströmte Rohrleitung einzusetzen ist und der umfasst:
- mindestens ein gebogenes, im Betrieb vibrierendes Messrohr zum Führen des Fluids und
- ein das mindestens eine Messrohr umhüllendes Gehäuse
   -- mit der Trägeranordnung aus Metall,
      --- in der das mindestens eine Messrohr einlass- und auslass-seitig schwingfähig gehaltert ist und
      --- aus der ein Messrohr-Segment seitwärts herausragt, und
      --- mit der aus einer ersten Kappenhälfte und einer zweiten Kappenhälfte bestehenden Metallkappe zum Abdecken des Messrohr-Segments bzw. der Messrohr-Segmente,
      --- von welcher ersten Kappenhälfte ein Rand aus einem ersten Randteil, einem zweiten Randteil, einem dritten Randteil und einem vierten Randteil besteht und
      --- von welcher zweiten Kappenhälfte ein Rand aus einem fünften Randteil, einem sechsten Randteil, einem siebten Randteil und einem achten Randteil besteht,
      --- wobei der erste, zweite und dritte bzw. der fünfte, sechste und siebte Randteil mit der Trägeranordnung durchgehend zu verbinden sind und
      --- wobei der vierte sowie der achte Randteil miteinander durchgehend zu verbinden sind,
bei welchem Verfahren
- aus einem teller-förmigen Halbzeug mit einer ringsum angeformten Randwulst ein Segment derart ausgeschnitten wird,
   -- dass der erste Randteil und der vierte Randteil bzw. der fünfte Randteil und der achte Randteil und an der Randwulst der zweite und der sechste bzw. der dritte und der siebte Randteil entstehen,
- ein erstes dieser Segmente auf die Trägeranordnung, eine erste Hälfte des Messrohrteils bzw. der Messrohrteile abdeckend, aufgesetzt wird,
- ein zweites dieser Segmente auf die Trägeranordnung, eine zweite Hälfte des Messrohrteils bzw. der Messrohrteile abdeckend, derart aufgesetzt wird,
   -- dass der vierte und der achte Randteil einander gegenüber liegen,
- der erste, der zweite, der dritte, der fünfte, der sechste und der siebte Randteil werden mit der Trägeranordnung vollständig verschweißt, und
- der vierte Randteil wird mit dem achten Randteil vollständig verschweißt.

Nach einer bevorzugten Verfahrens-Ausgestaltung ist das Halbzeug aus einem ebenen kreis-förmigen Blech gebildet, und es wird durch Metalldrücken mit einer viertel-torus-förmigen Randwulst versehen.

Ein Vorteil der Erfindung besteht darin, dass, obwohl durch den Rückgriff auf die an sich bekannten zwei Kappenhälften eine Verbindungsnaht zwischen ihnen erforderlich wird, die Kosten der Tiefziehform für die Metallkappe auf die geringeren Herstellungskosten der Kappenhälften reduziert sind.

Die Erfindung wird nun anhand der Figuren der Zeichnung näher erläutert, in der ein bevorzugtes Ausführungsbeispiel dargestellt ist. Funktionsgleiche Teile sind in den einzelnen Figuren mit denselben Bezugszeichen versehen, die jedoch in nachfolgenden Figuren nur dann wiederholt sind, wenn es sinnvoll erscheint.
Fig. 1 zeigt eine Seitenansicht eines als Coriolis-Durchfluss/Dichte/Viskositäts-Aufnehmer ausgebildeten Messaufnehmers,
Fig. 2 zeigt eine Vorderansicht des Messaufnehmers der Fig. 1,
Fig. 3 zeigt perspektivisch leicht von oben den Messaufnehmer der Fig. 1 und 2 mit abgenommener einer Kappenhälfte,
Fig. 4 zeigt perspektivisch leicht von unten den Messaufnehmer der Fig. 3,
Fig. 5 zeigt perspektivisch ein Halbzeug, das bei der Herstellung der Kappenhälften verwendet wird, und
Fig. 6 zeigt perspektivisch fertige Kappenhälften.

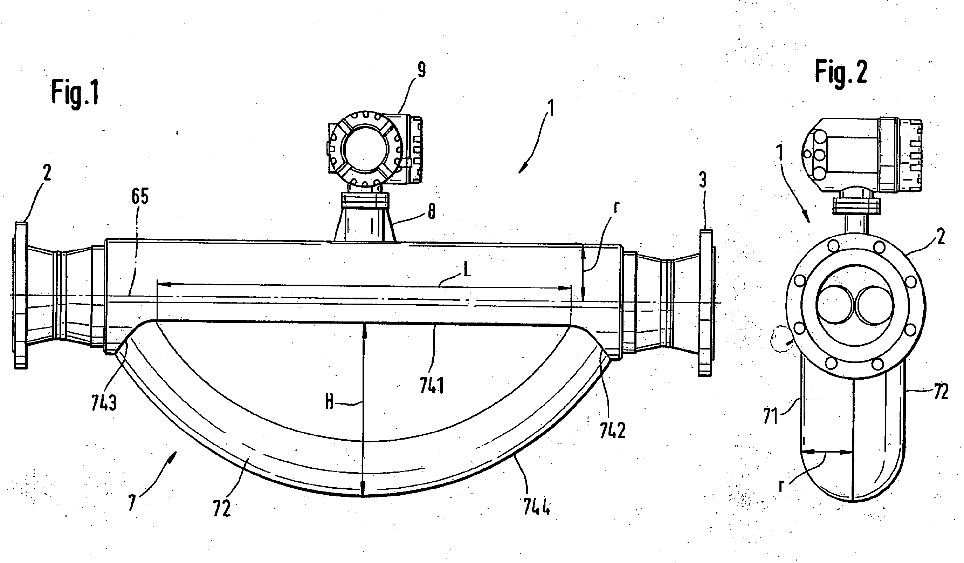

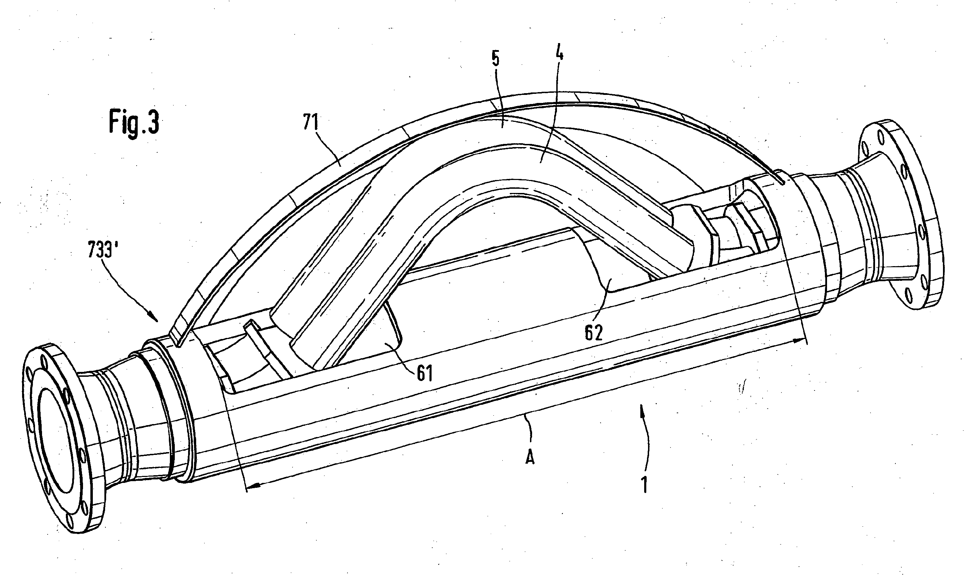

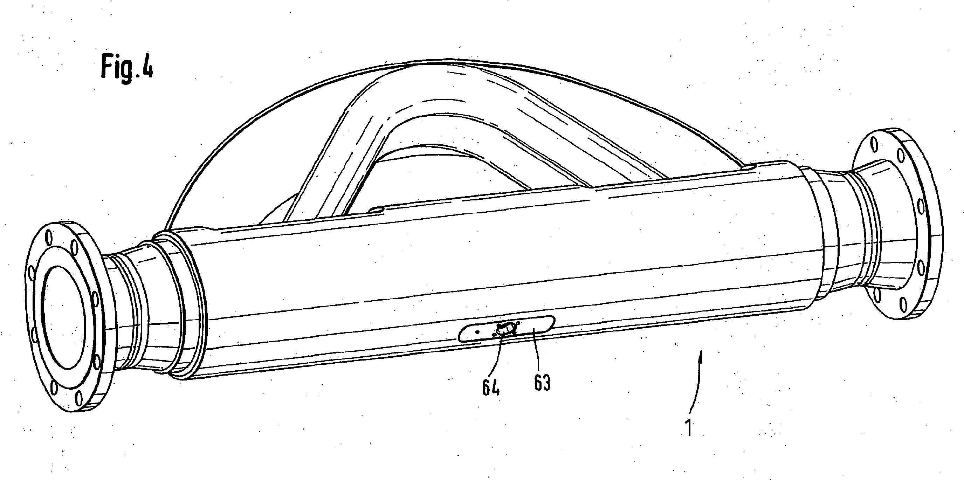

In den Fig. 1 bis 4 ist in unterschiedlichen Darstellungsarten ein Messaufnehmer 1 vom Vibrationstyp gezeigt, der hier ein Coriolis-Durchfluss/Dichte/ Viskositäts-Aufnehmer ist, und zwar sind in der Fig. 1 die Seitenansicht des Messaufnehmers 1, in Fig. 2 dessen Vorderansicht sowie in den Fig. 3 und 4 perspektivische Ansichten des Messaufnehmers 1 aus zwei unterschiedlichen Blickwinkeln dargestellt. Die Fig. 1 bis 4 werden im Folgenden gemeinsam erläutert.

Der Messaufnehmer 1 ist im Betrieb in den Verlauf einer von einem zu messenden flüssigen, gasförmigen oder dampfförmigen Fluid durchströmten - aus Gründen der Übersichtlichkeit jedoch nicht dargestellten - Rohrleitung eines gegebenen Durchmessers über Flansche 2, 3, einzusetzen. Anstatt mittels Flanschen kann der Messaufnehmer 1 an die erwähnte Rohrleitung auch durch andere bekannte Mittel angeschlossen werden, wie z.B. mittels Triclamp-Anschlüssen oder Schraubverbindungen.

Der Messaufnehmer 1 hat zwei parallele Messrohre 4, 5 zum Führen des Fluids, die jeweils in einer Ebene gebogene sind; es kann jedoch auch nur ein einziges gebogenes Messrohr vorgesehen sein, oder es kann mindestens ein schraubenförmig gebogenes Messrohr vorgesehen sein.

Die Messrohre 4, 5 werden im Betrieb von einer meist am Scheitel der Messrohre 4, 5 fixierten Erregeranordnung zu stimmgabel-artigen Vibrationen, bevorzugt Resonanz-Vibrationen, erregt, die aus Übersichtlichkeitsgründen nicht dargestellt ist. Deswegen sind ferner auch zwei Sensoranordnungen nicht dargestellt, von denen die eine einlass- und die andere auslass-seitig an den Messrohren 4, 5, bevorzugt in gleichem Abstand vom Scheitel, fixiert ist.

Die Messrohre 4, 5 sind von einem Gehäuse umhüllt, das einerseits aus einer Trägeranordnung aus Metall, hier ein Trägerrohr 6, und andererseits aus einer Metallkappe 7 besteht; das Trägerrohr 6 ist beim Ausführungsbeispiel kreiszylindrisch.

Die Messrohre 4, 5 sind in der Trägeranordnung, hier im Trägerrohr 6, einlass-und auslass-seitig schwingfähig gehaltert. Von jedem Messrohr 4, 5 ragt ein jeweiliges Messrohr-Segment seitwärts aus der Trägeranordnung heraus. Wie in Fig. 3 zu sehen ist, laufen die seitwärts herausragenden Messrohr-Segmente durch zwei Ausnehmungen 61, 62 des Trägerrohrs 6.

Die Metallkappe 7 besteht aus einer ersten Kappenhälfte 71 und aus einer zweiten Kappenhälfte 72; in den Fig. 3 und 4 ist die letztere nicht dargestellt, damit die Messrohre 4, 5 sichtbar sind. Die aus den beiden Kappenhälften 71, 72 bestehende Metallkappe 7 deckt im fertigen Zustand des Messaufnehmers 1 die Messrohre-Segmente 4, 5, ohne sie zu berühren und ohne dadurch deren Vibrationen zu stören, vollständig ab, so dass die innerhalb des von der Trägeranordnung, hier vom Trägerrohr 6, und der Metallkappe 7 gebildeten Gehäuses liegenden Teile des Messaufnehmers 1 gegenüber der Umgebung hermetisch abgedichtet sind.

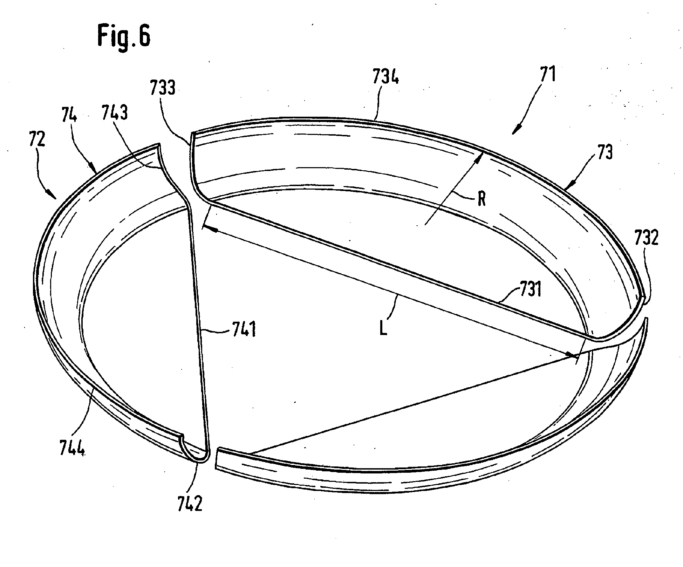

Die erste Kappenhälfte 71 hat einen umlaufenden Rand 73 und die zweite Kappenhälfte 72 einen umlaufenden Rand 74, vgl. Fig. 6. Der Rand 73 besteht aus einem ersten Randteil 731, aus einem zweiten Randteil 732, aus einem dritten Randteil 733 und aus einem kreissbogen-förmigen vierten Randteil 734. Der Rand 74 besteht aus einem fünften Randteil 741, aus einem sechsten Randteil 742, aus einem siebten Randteil 743 und aus einem kreissbogen-förmigen achten Randteil 744. Die Randteile 731, 741 sind im Ausführungsbeispiel bevorzugtygerade, was jedoch nicht zwingend ist

Die Randteile 732, 733, 742, 733 können gerade sein, wenn die Trägeranordnung z.B. einen quadratischen oder rechteckigen Querschnitt hat, so dass diese Randteile auf der zugehörigen ebenen Mantelfläche aufliegen und damit verbunden werden. Aber auch beim kreis-zylindrischen Trägerrohr 6 des Ausführungsbeispiels kann die Mantelfläche mit einer ebenen Auflagefläche versehen sein, so dass die Randteile 732, 733, 742, 733 gerade sein können.

Die Randteile 731, 732, 733 des Randes 73 und die Randteile 741, 742, 743 des Randes 74 sind mit der Trägeranordnung, hier dem Trägerrohr 6, durchgehend verbunden, hier verschweißt. Die Randteile 734, 744 sind miteinander durchgehend verbunden, hier ebenfalls verschweißt.

Die Randteile 731, 741 sind wie erwähnt im Ausführungsbeispiel gerade, haben eine Länge L und liegen auf der Mantelfläche des Trägerrohrs 6 entlang einer seiner Mantellinien auf. Die Randteile 734, 744 haben die Form eines Kreisbogens mit dem Radius R, dessen Höhe H größer als der maximale Abstand der Messrohr-Segmente von der Mittellinie des Trägerrohrs 6 ist. Die genaue Form der Randteile 732, 733, 742, 733 wird bei der Erläuterung der Herstellung der Kappenhälften 71, 72 noch erläutert.

In Fig. 1 ist schließlich noch ein an der Trägeranordnung, hier am Trägerrohr 6, mittels eines hals-artigen Übergangsstücks 8 fixiertes Elektronik-Gehäuse 9 gezeigt, in dem sich eine Mess- und Betriebsschaltung des Messaufnehmers 1 befindet; diese erzeugt einerseits ein die erwähnte Erregeranordnung speisendes Erregersignal, andererseits empfängt die Mess- und Betriebsschaltung die Signale der erwähnten Sensoranordnungen und generiert daraus gewünschte, den Mässedurchfluss, die Dichte, die Viskosität oder die Temperatur des strömenden Fluids repräsentierende Signale, die weiterverarbeitet oder angezeigt werden können.

In den Fig. 3 und 4 sind das Übergangsstück 8 und das Elektronik-Gehäuse 9 weggelassen; lediglich in Fig. 4 ist eine Ansatzfläche 63 für das Übergangsstück 8 zu sehen. In der Ansatzfläche 63 ist eine elektrische Durchführung 64 angeordnet, mittels der elektrische Verbindungen zur oben erwähnten Erregeranordnung und zu den oben erwähnten Sensoranordnungen sowie gegebenenfalls weiteren elektrischen Komponenten, wie z.B. Temperatursensoren, herstellbar sind.

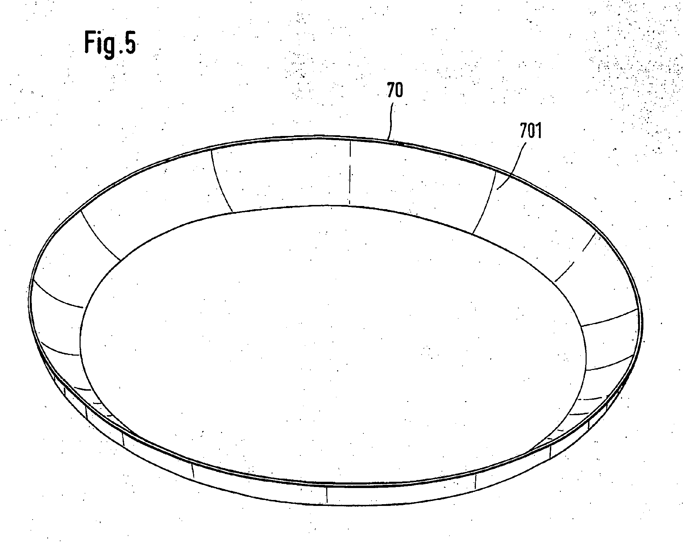

Anhand der Fig. 5 und 6 wird ein Ausführungsbeispiel eines Verfahrens zum Herstellen einer Verbindung zwischen der Metallkappe 7 und der Trägeranordnung, hier dem Trägerrohr 6, des Messaufnehmers 1 vom Vibrationstyp erläutert. Diesem Verbindungsverfahren wird ein teller-förmiges Halbzeug zugrunde gelegt, an das eine ringsum durchgehende und umlaufende Randwulst angeformt ist.

Beim Ausführungsbeispiel ist das Halbzeug ein aus einem ebenen kreis-förmigen Blech gebildetes, im wesentlichen kreis-förmiges Halbzeug 70, das durch Metalldrücken mit einer viertel-torus-förmigen Randwulst 701 versehen ist.

Beim Metalldrücken handelt es sich um eine Kaltverformung von Metallen, bei der ein zu verformendes Blech mittels entsprechend geformter Rollen in eine Form aus Holz oder Metall gedrückt wird. Entweder das Blech rotiert und die Rollen sind raumfest - außer dass sie um eine jeweilige Aufhängeachse drehbar sind; oder das Blech dreht sich nicht und die Rollen rotieren um eine Hauptdrehachse zusätzlich zu ihrer Drehung um die jeweilige Aufhängeachse.

In Fig. 5 ist zwar ein kreis-förmiges Halbzeug 70 dargestellt, es kann jedoch auch jede andere geeignete Form, z.B. ein Quadrat oder ein Rechteck, zugrunde gelegt werden. Zur Bildung der Randwulst können in diesem Falle die Ränder des Bleches sozusagen hochgeklappt werden, die mit dem Blech einen Winkel zwischen ca. 150° und bevorzugt 90° einschließen, so dass eine quadratischer oder rechteckiger Kasten entsteht.

Ein derartiger Kasten kann gegenüber dem kreis-förmigen Halbzeug 70 den Vorteil haben, dass bei entsprechender Dimensionierung aus ihm für mehr als eine einzige Nennweite Kappenhälften ausgeschnitten werden können. Aufgrund des mit dem kreis-förmigen Halbzeug 70 erreichbaren optischen Eindrucks des Vibrationsaufnehmers 1, also aufgrund seines ansprechenden Designs, wird jedoch bevorzugt das kreis-förmige Halbzeug 70 verwendet.

Nachdem das Halbzeug, hier das kreis-förmige Halbzeug 70, hergestellt worden ist, werden entsprechend Fig. 6 so viele Segmente daraus ausgeschnitten, wie deren Abmessungen ermöglichen; in Fig. 6 sind drei solche Segmente als möglich dargestellt, wovon zwei für einen ersten Messaufnehmer und das dritte Segment für einen zweiten Messaufnehmer verwendet werden.

Bevorzugt geschieht das Ausschneiden durch Laser-Schneiden mittels und in einer entsprechenden Schneidvorrichtung; diese erlaubt es, jede gewünschte Form der Ränder des auszuschneidenen Segments zu erhalten. Durch das Ausschneiden der Segmente entstehen die oben bereits erläuterten Randteile 731, 732, 733, 734 bzw. 741, 742, 743, 744.

Diese Schneidmöglichkeit ist besonders wichtig, wenn wie im Ausführungsbeispiel einerseits die Randwulst 701 viertel-torus-förmig ist und andererseits die Trägeranordnung als das kreiszylindrische Trägerrohr 6 ausgebildet ist. Dann ergeben sich nämlich die Raumformen der der Mantelfläche des Trägerrohrs 6 folgenden Randteile 732, 733, 742, 743 als räumliche Durchdringungskurven der jeweils kreis-förmigen Querschnitte des Trägerrohrs 6 und der viertel-torus-förmigen Randwulst 701, wie dies in Fig. 3 andeutungsweise beim Pfeil 733' zu sehen ist.

Aus der bereits erwähnten Bedingung, dass die Kappenhälften 71, 72 die Vibrationen der Messrohre 4, 5 nicht behindern dürfen, d.h. also dass diese frei schwingen sollen und somit eien Sicherheitsabstand s zur Metallkappe haben müssen, lässt sich eine Bemessung für das Halbzeug, insb. das kreisförmige Halbzeug 70 mit viertel-torus-förmiger Randwulst 701, wie folgt angeben.

Die oben bereits definierten Größen Länge L der Randteile 731, 741, Höhe H des Kreisbogens der Randteile 734, 744 sowie Radius r des Vierteltorus, vgl. Fig. 2, müssen so gewählt werden, dass die folgenden Bedingungen eingehalten sind,

L größer als der Abstand A der einlass-seitigen Begrenzung der Ausnehmung 61 von der auslass-seitigen Begrenzung der Ausnehmung 62, vgl. Fig. 3, bzw. größer als ein entsprechender Abstand bei anderer Raumform der Trägeranordnung,

H größer als der Abstand des Scheitels der Messrohr-Segmente von der Mittellinie 65 der Trägeranordnung plus Sicherheitsabstand s,

r gleich dem doppelten Außendurchmesser eines Messrohrs plus dem gegenseitigen Abstand der Messrohre - falls mehr als ein Messrohr vorhanden ist - plus 2s.

Das Ausschneiden der Segmente 71, 72 wird so vorgenommen, dass der Rand 731 bzw. der Rand 734 und an der Randwulst 701 der Randteil 732 und der Randteil 741 bzw. der Randteil 733 und der Randteil 743 entstehen. Ein erstes dieser Segmente wird auf die Trägeranordnung, hier das Trägerrohr 6, eine erste Hälfte des Messrohrteils bzw. der Messrohrteile abdeckend, aufgesetzt. Ein zweites dieser Segmente wird ebenfalls auf die Trägeranordnung, hier wieder das Trägerrohr 6, eine zweite Hälfte des Messrohrteils bzw. der Messrohrteile abdeckend, derart aufgesetzt, dass der vierte Randteil 734 und der achte Randteil 744 einander gegenüber liegen.

Die Randteile 731, 732, 733, 741, 742, 743 werden nun noch mit der Trägeranordnung, hier mit dem Trägerrohr 6, vollständig verschweißt und ebenso der Randteil 734 mit dem Randteil 744.

## Patentansprüche

1. Messaufnehmer (1) vom Vibrationstyp für ein Fluid, der in eine vom Fluid mindestens temporär durchströmte Rohrleitung einzusetzen ist und der umfasst :
- mindestens ein gebogenes, im Betrieb vibrierendes Messrohr (4, 5) zum Führen des Fluids und
- ein das mindestens eine Messrohr umhüllendes Gehäuse
-- mit einer Trägeranordnung aus Metall,
--- in der das mindestens eine Messrohr einlass-und auslass-seitig schwingfähig gehaltert ist und
--- aus der ein Messrohr-Segment seitwärts herausragt, und
-- mit einer aus einer eine, insb. viertel-torus-förmige, Randwulst aufweisenden ersten Kappenhälfte (71) und einer eine, insb. viertel-torus-förmige, Randwulst aufweisenden zweiten Kappenhälfte (72) bestehenden Metallkappe (7) zum Abdecken des Messrohr-Segments bzw. der Messrohr-Segmente,
--- von welcher ersten Kappenhälfte (71) ein Rand (73) aus einem ersten Randteil (731), einem zweiten Randteil (732), einem dritten Randteil (733) und einem kreissbogen-förmigen vierten Randteil (734) besteht, und
--- von welcher zweiten Kappenhälfte (72) ein Rand (74) aus einem fünften Randteil (741), einem sechsten Randteil (742), einem siebten Randteil (743) und einem kreissbogen-förmigen achten Randteil (744) besteht,
--- wobei der zweite Randteil (732), der dritte Randteil (733) sowie der vierte Randteil (734) an der Randwulst der ersten Kappenhälfte (71) gebildet sind,
--- wobei der sechste Randteil (742), der siebte Randteil (743) und der achte Randteil (744) an der Randwulst der zweiten Kappenhälfte (72) gebildet sind,
--- wobei der erste, zweite und dritte bzw. der fünfte, sechste und siebte Randteil mit der Trägeranordnung durchgehend verbunden sind und
--- wobei der vierte sowie der achte Randteil miteinander durchgehend verbunden sind.

2. Verfahren zum Herstellen einer Verbindung einer Metallkappe (7) mit einer Trägeranordnung eines Messaufnehmers (1) vom Vibrationstyp für ein Fluid, der in eine vom Fluid mindestens temporär durchströmte Rohrleitung einzusetzen ist und der umfasst:
- mindestens ein gebogenes, im Betrieb vibrierendes Messrohr (4, 5) zum Führen des Fluids und
- ein das mindestens eine Messrohr umhüllendes Gehäuse
-- mit der Trägeranordnung aus Metall,
--- in der das mindestens eine Messrohr einlass- und auslass-seitig schwingfähig gehaltert ist und
--- aus der ein Messrohr-Segment seitwärts herausragt, und
-- mit der aus einer ersten Kappenhälfte (71) und einer zweiten Kappenhälfte (72) bestehenden Metallkappe (7) zum Abdecken des Messrohr-Segments bzw. der Messrohr-Segmente,
--- von welcher ersten Kappenhälfte (71) ein Rand (73) aus einem ersten Randteil (731), einem zweiten Randteil (732), einem dritten Randteil (733) und einem vierten Randteil (734) besteht und
--- von welcher zweiten Kappenhälfte ein Rand aus einem fünften Randteil (741), einem sechsten Randteil (742), einem siebten Randteil (743) und einem achten Randteil (744) besteht,
--- wobei der erste, zweite und dritte bzw. der fünfte, sechste und siebte Randteil mit der Trägeranordnung durchgehend zu verbinden sind und
--- wobei der vierte sowie der achte Randteil miteinander durchgehend zu verbinden sind,
bei welchem Verfahren
- aus einem teller-förmigen Halbzeug mit einer ringsum angeformten Randwulst ein Segment derart ausgeschnitten wird,
-- dass der erste Randteil (731) und der vierte Randteil (734) bzw. der fünfte Randteil (741) und der achte Randteil (744) und an der Randwulst der zweite Randteil (732) und der sechste Randteil (742) bzw. der dritte Randteil (733) und der siebte Randteil (743) entstehen,
- ein erstes dieser Segmente auf die Trägeranordnung, eine erste Hälfte des Messrohrteils bzw. der Messrohrteile abdeckend, aufgesetzt wird,
- ein zweites dieser Segmente auf die Trägeranordnung, eine zweite Hälfte des Messrohrteils bzw. der Messrohrteile abdeckend, derart aufgesetzt wird,
-- dass der vierte und der achte Randteil (734, 744) einander gegenüber liegen,
- der erste, der zweite, der dritte, der fünfte, der sechste und der siebte Randteil (731, 732, 733, 741, 742, 743) mit der Trägeranordnung vollständig verschweißt, wird und
- der vierte Randteil (734) mit dem achten Randteil (744) vollständig verschweißt wird.

3. Verfahren nach Anspruch 2, bei dem ein kreis-förmiges Halbzeug (70) aus einem ebenen kreis-förmigen Blech gebildet und durch Metalldrücken mit einer viertel-torus-förmigen Randwulst (701) versehen wird.

## Claims

1. Sensor (1) of the vibronic type for a fluid, which is to be used in a pipe through which fluid at least temporarily flows and which comprises:
- at least one curved measuring tube (4, 5), which vibrates during operation, for conducting the fluid, and a housing surrounding the at least one measuring tube,
- with a metal support arrangement,
- in which the at least one measuring tube is mounted at the inlet and outlet side in a manner in which it can oscillate, and out of which a measuring tube segment projects at the side, and
- with a metal cap (7) for covering the measuring tube segment or the measuring tube segments, consisting of a first cap half (71) having an, in particular quarter-torus shaped, raised edge and a second cap half (72) having an, in particular quarter-torus shaped, raised edge,
- of said first cap half (71), an edge (73) consists of a first edge section (731), a second edge section (732), a third edge section (733) and an arc-shaped fourth edge section (734), and
- of said second cap half (72), an edge (74) consists of a fifth edge section (741), a sixth edge section (742), a seventh edge section (743) and an arc-shaped eighth edge section (744),
- wherein the second edge section (732), the third edge section (733) and the fourth edge section (734) are formed on the raised edge of the first cap half (71),
- wherein the sixth edge section (742), the seventh edge section (743) and the eighth edge section (744) are formed on the raised edge of the second cap half (72),
- wherein the first, second and third, and the fifth, sixth and seventh edge section are fully welded to the support arrangement, and
- wherein the fourth edge section is fully welded to the eighth edge section.

2. Procedure designed to establish a connection of a metal cap (7) with a support arrangement of a vibronic-type sensor (1) for a fluid, which is to be used in a pipe through which fluid at least temporarily flows, and which comprises:
- at least one curved measuring tube (4, 5), which vibrates during operation, for conducting the fluid, and
- a housing surrounding the at least one measuring tube
-- with a metal support arrangement,
--- in which the at least one measuring tube is mounted at the inlet and outlet side in a manner in which it can oscillate,
--- out of which a measuring tube segment projects at the side, and
-- with the metal cap, consisting of a first cap half (71) and a second cap half (72), for covering the measuring tube segment or the measuring tube segments,
--- wherein of said first cap half (71) an edge (73) consists of a first edge section (731), a second edge section (732), a third edge section (733) and a fourth edge section (734), and
--- wherein of said second cap half (72) an edge (74) consists of a fifth edge section (741), a sixth edge section (742), a seventh edge section (743) and an eighth edge section (744),
--- wherein the first, second and third or, as the case may be, the fifth, sixth and seventh edge section are to be connected end-to-end with the support arrangement, and
--- wherein the fourth and the eighth edge section are to be interconnected end-to-end, said procedure consisting of
- cutting a segment out of a disc-shaped semi-finished product, with a raised edge in such a way that
-- the first edge section (731) and the fourth edge section (734), or, respectively, the fifth edge section (741) and the eighth edge section (744) are formed, and - on the raised edge - the second edge section (732) and the sixth edge section (742), or, respectively, the third edge section (733) and the seventh edge section (743) are formed
- a first of these segments is placed on the support arrangement, covering a first half of the measuring tube section or measuring tube sections
- a second of these segments is placed on the support arrangement, covering a second half of the measuring tube section or measuring tube sections in such a way that
-- the fourth and eighth edge sections (734, 744) are opposite one another,
- the first, the second, the third, the fifth, the sixth and the seventh edge section (731, 732, 733, 741, 742, 743) are fully welded to the support arrangement, and
- the fourth edge section (734) is fully welded to the eighth edge section (744).

3. Procedure as claimed in Claim 2, wherein a circular semi-finished product (70) is formed from a flat circular sheet and provided with a raised edge (701), in the shape of a quarter torus, through metal spinning.

## Revendications

1. Capteur (1) du type à vibrations pour un fluide, qui doit être utilisé dans une conduite parcourue au moins temporairement par le fluide, et qui comprend :
- au moins un tube de mesure (4, 5) coudé, vibrant en fonctionnement, destiné à guider le fluide, et
- un boîtier enveloppant l'au moins un tube de mesure
-- avec un ensemble support métallique,
--- dans lequel l'au moins un tube de mesure est suspendu côtés entrée et sortie de manière à pouvoir vibrer, et
--- duquel déborde latéralement un segment du tube de mesure, et
-- avec un couvercle métallique (7) constitué d'un premier demi-couvercle (71) présentant un renflement marginal, notamment en forme de quart de tore, et d'un deuxième demi-couvercle (72) présentant un renflement marginal, notamment en forme de quart de tore, destinés à recouvrir le ou les segments du tube de mesure,
--- premier demi-couvercle (71) à partir duquel est constitué un bord (73) se composant d'une première partie marginale (731), d'une deuxième partie marginale (732), d'une troisième partie marginale (733) et d'une quatrième partie marginale (734) de forme circulaire, et
--- deuxième demi-couvercle (72) à partir duquel est constitué un bord (74) se composant d'une cinquième partie marginale (741), d'une sixième partie marginale (742), d'une septième partie marginale (743) et d'une huitième partie marginale (744) de forme circulaire,
--- la deuxième partie marginale (732), la troisième partie marginale (733) et la quatrième partie marginale (734) étant formées sur le renflement marginal du premier demi-couvercle (71),
--- la sixième partie marginale (742), la septième partie marginale (743) et la huitième partie marginale (744) étant formées sur le renflement marginal du deuxième demi-couvercle (72),
--- le premier, deuxième et troisième ou le cinquième, sixième et septième bord marginal étant reliés de bout en bout avec l'ensemble support, et
--- le quatrième et le huitième bord marginal étant reliés entre eux de bout en bout.

2. Procédé destiné à la réalisation d'une liaison entre un couvercle métallique et un ensemble support d'un capteur (1) du type à vibrations pour un fluide, qui doit être utilisé dans une conduite parcourue au moins temporairement par le fluide, et qui comprend :
- au moins un tube de mesure (4, 5) coudé, vibrant en fonctionnement, destiné à guider le fluide et
- un boîtier enveloppant l'au moins un tube de mesure
-- avec un ensemble support métallique,
--- dans lequel l'au moins un tube de mesure est suspendu côtés entrée et sortie de manière à pouvoir vibrer, et
--- duquel déborde latéralement un segment du tube de mesure, et
-- avec le couvercle métallique constitué d'un premier demi-couvercle (71) et d'un deuxième demi-couvercle (72), destinés à recouvrir le ou les segments du tube de mesure,
--- premier demi-couvercle (71) à partir duquel est constitué un bord (73) se composant d'une première partie marginale (731), d'une deuxième partie marginale (732), d'une troisième partie marginale (733) et d'une quatrième partie marginale (734) et
--- deuxième demi-couvercle (72) à partir duquel est constitué un bord (74) se composant d'une cinquième partie marginale (741), d'une sixième partie marginale (742), d'une septième partie marginale (743) et d'une huitième partie marginale (744),
--- la première, deuxième et troisième, et respectivement la cinquième, sixième et septième partie marginale devant être reliées de bout en bout avec l'ensemble support et
--- la quatrième ainsi que la huitième partie marginale devant être reliées entre elles de bout en bout,
procédé pour lequel
- est découpé à partir d'un produit semi-fini en forme de disque, doté d'un renflement marginal, un segment de telle manière
-- que soient créées la première partie marginale (731) et la quatrième partie marginale (734) et respectivement la cinquième partie marginale (741) et la huitième partie marginale (744) et, sur le renflement marginal, la deuxième partie marginale (732) et la sixième partie marginale (742) et respectivement la troisième partie marginale (733) et la septième partie marginale (743)
- un premier de ces segments est disposé sur l'ensemble support, recouvrant une première moitié de l'élément ou des éléments de tube de mesure, de telle manière
-- que la quatrième et la huitième partie marginale (734, 744) sont situées en face l'une de l'autre,
- la première, la deuxième, la troisième, la cinquième, la sixième et la septième partie marginale (731, 732, 733, 741, 742, 743) sont soudées intégralement avec l'ensemble support, et
- la quatrième partie marginale (734) est soudée intégralement avec la huitième partie marginale (744).

3. Procédé selon la revendication 2, pour lequel un produit semi-fini (70) circulaire est formé à partir d'une tôle plate circulaire et muni d'un renflement marginal (701) en forme de quart de tore, obtenu par repoussage.
